# EUROPÄISCHE PATENTANMELDUNG

(11) **EP 4 471 632 A1**
(43) Veröffentlichungstag der Anmeldung: **04.12.2024**
(21) Anmeldenummer: 24174585.0
(22) Anmeldetag: 07.05.2024
(51) Int. Cl.: G06F 21/44, H04L 9/40, H04W 12/06

(54) **MEHRWEGE-AUTHENTISIERUNG VON SICHERHEITSRELEVANTEN ANWENDUNGEN UND GERÄTEN**

(30) Priorität: 26.05.2023 DE 102023113979
(71) Anmelder: Giesecke+Devrient ePayments GmbH, 81677 München (DE)
(72) Erfinder: Martini, Ullrich, 81677 München (DE)
(74) Vertreter: Giesecke+Devrient IP

(57) **Zusammenfassung**

Es ist ein Verfahren und eine Vorrichtung für die Mehrwege-Authentisierung beschrieben. Ein Kartenleser und eine darauf ausgeführte Anwendung interagieren mit einer Chipkarte. Hierbei wird eine Anfrage an die Chipkarte gesendet. Die Chipkarte stellt eine Kennung, wie z.B. eine Zufallszahl bereit. Der Kartenleser initiiert eine Attestierung der Anwendung bei einer Attestierstelle und übermittelt eine Attestierungsantwort sowie die Kennung an einen zu nutzenden Dienst. Der Dienst verifiziert die Attestierungsantwort und signiert die Kennung, wenn die Attestierungsantwort gültig ist. Die signierte Kennung wird dann an den Karteleser übermittelt, welcher die signierte Kennung wiederum an die Chipkarte übermittelt. Nun kann die Chipkarte überprüfen, ob die signierte Kennung gültig ist. Wenn die signierte Kennung gültig ist, stellt die Chipkarte weitere Funktionen an die Anwendung bereit.

## Beschreibung

### Technisches Gebiet

Die Erfindung betrifft ein Verfahren zum Interagieren zwischen einem Kartenleser und einer Chipkarte sowie einen Kartenleser, der ausgestaltet ist, eine Mehrwege-Authentisierung unter Zugriff auf eine Chipkarte auszuführen. Die hier referenzierten Chipkarten sind beispielsweise Chipkarten, die einen Microcontroller mit RFID-Eigenschaften (Radio-Frequency Identification - Eigenschaften) enthalten, oder sog. Dual-Interface-Chipkarten. Der Kartenleser kann, muss aber nicht notwendigerweise ein zertifizierter sicherer Kartenleser sein.

### Hintergrund

Kartenförmige Datenträger, insbesondere Chipkarten, werden in vielen Bereichen eingesetzt, beispielsweise zur Durchführung von Transaktionen des bargeldlosen Zahlungsverkehrs, als Ausweisdokumente oder zum Nachweis von Zugangsberechtigungen. Im Kontext dieser Beschreibung werden solche Datenträger für sämtliche Anwendungsfälle als Chipkarte bezeichnet.

Eine Chipkarte weist einen Kartenkörper und einen in den Kartenkörper eingebetteten integrierten Schaltkreis zum Beispiel in Form eines Chipmoduls mit einem Chip auf. Das Chipmodul wird in eine Kavität oder Modulöffnung des Kartenkörpers eingesetzt.

Chipkarten können einen integrierten elektrischen Schwingkreis enthalten, über den Energie an elektronische Bauteile der Chipkarte übertragen werden kann. Dies erfolgt in der Regel dadurch, dass dem Schwingkreis Energie über ein Magnetfeld zugeführt wird. Diese Energie kann dann verwendet werden, um Verarbeitungs- und kontaktlose Kommunikationsfunktionen der Chipkarte durchzuführen. Beispielsweise können Chipkartencontroller mit RFID-Funktionalität eingesetzt werden. Der Schwingkreis wird von einer Spule mit einem zusätzlichen Kondensator auf dem Chipmodul gebildet.

Eine Chipkarte kann auch eine sog. Dual Interface (DI) Karte mit entsprechender Funktionalität sein, bei der der Kartenkörper der Chipkarte zum Teil oder vollständig aus Metall besteht. Die Funktionsweise einer solchen Karte besteht darin, dass ein Chipmodul verwendet wird, das selbst eine Spule enthält (Coil-On-Module). Diese Spule koppelt auf den metallischen Kartenkörper.

Dual-Interface-Chipkarten sind Chipkarten, mit denen sowohl kontaktbehaftet als auch kontaktlos kommuniziert werden kann. Wenn sie als Bankkarten oder Kreditkarten Anwendung finden, liegen sie üblicherweise im sogenannten ID-I-Format (gemäß ISO 7810) vor. Die vorliegende Erfindung ist aber nicht auf dieses Format beschränkt. Die kontaktbehaftete Kommunikation erfolgt über freiliegende Kontaktbereiche, das sogenannte Kontaktpad, während die kontaktlose Kommunikation in aller Regel über eine im Innern des Kartenkörpers verlaufende Antennenspule und einen wie oben beschriebenen Schwingkreis erfolgt. Sowohl die Kontaktbereiche als auch die Antennenspule sind mit einem IC-Chip verbunden, beispielsweise elektrisch leitend oder induktiv gekoppelt. Eine Chipkarte kann auch in ein Smartphone oder ein tragbares elektronisches Gerät integriert sein, oder sogar von einem Smartphone oder einer anderen Recheneinrichtung emuliert werden.

Aus der DE 102015011076 A1 ist ein Verfahren zum Absichern einer Transaktion zwischen einem Datenträger in Form einer Chipkarte und einem Dienstanbieter bekannt, bei dem auf dem Datenträger eine Sicherheitsidentität gespeichert ist, mit der von einem Authentisierungsserver eine Anwendungsidentität abgerufen wird, welche zur Ausführung der Transaktion berechtigt und dem Dienstanbieter vorgelegt wird. Für den Dienstanbieter wird dadurch sichergestellt, dass Transaktionen nur mit zugeordneten Datenträgern ausgeführt werden können.

### Darstellung der Erfindung

Es kann als Aufgabe betrachtet werden, für eine Chipkarte mit sicherheitsrelevanten Funktionen die Sicherheit beim Zugreifen einer Anwendung auf die Chipkarte zu erhöhen.

Diese Aufgabe wird gelöst durch ein Verfahren und eine Vorrichtung gemäß den unabhängigen Ansprüchen. Weitere Ausführungsformen ergeben sich aus den abhängigen Ansprüchen sowie aus der folgenden Beschreibung.

Gemäß einem Aspekt ist ein Verfahren zum Interagieren zwischen einem Kartenleser, auf dem eine Anwendung ausgeführt wird, und einer Chipkarte angegeben. Das Verfahren weist die folgenden Schritte auf: Senden, durch den Kartenleser, einer Anfrage an die Chipkarte; Bereitstellen, durch die Chipkarte, einer Kennung; Übermitteln der Kennung von der Chipkarte an den Kartenleser; Initiieren, durch den Kartenleser, einer Attestierung der Anwendung bei einer Attestierstelle; Übermitteln, durch den Kartenleser, einer Attestierungsantwort sowie der Kennung an einen Dienst; Überprüfen der Attestierungsantwort auf Gültigkeit; wenn die Attestierungsantwort gültig ist: Signieren, durch den Dienst, der Kennung; Übermitteln, durch den Dienst, der signierten Kennung an die Chipkarte; Überprüfen, durch die Chipkarte, einer Gültigkeit der signierten Kennung; Bereitstellen von Funktionen der Chipkarte an die Anwendung, wenn die signierte Kennung gültig ist. Die Kennung kann beispielsweise für jede Sitzung neu erstellt werden, um die Sicherheit des Verfahrens zu verbessern. Das Verfahren stellt für eine Chipkarte sicher, dass eine auf sie zugreifende Anwendung vertrauenswürdig ist.

Für das Signieren und Attestieren werden beispielsweise bekannte kryptografische Verfahren sowie Zertifikate genutzt. Beispielsweise werden die Attestierungsantworten der Attestierstelle verifiziert, indem die Gültigkeit eines entsprechenden Zertifikats überprüft wird.

Das Überprüfen der Gültigkeit der Kennung durch die Chipkarte erfolgt beispielsweise dadurch, dass die Chipkarte die signierte Kennung heranzieht und mit der ursprünglichen durch die Chipkarte bereitgestellten Kennung vergleicht. Wenn die Signatur gültig ist und die signierte Kennung identisch mit der bereitgestellten Kennung ist bzw. dieser entspricht, dann ist die signierte Kennung gültig.

Das hier beschriebene Verfahren verbessert die Angriffssicherheit von Chipkarten, auf welche eine auf einem Kartenleser ausgeführte Anwendung zugreift. Als Kartenleser wird in dem Zusammenhang dieser Beschreibung eine Recheneinheit beschrieben, welche für das Ausführen von Anwendungen ausgestaltet ist, die auf eine Chipkarte zugreifen, um bestimmte sicherheitsrelevante Funktionen auszuführen oder den Zugang zu solchen Funktionen zu steuern, beispielsweise indem die Chipkarte eine Signatur bereitstellt. Eine Chipkarte kann nicht unmittelbar überprüfen, ob eine auf dem Kartenleser ausgeführte Anwendung authentisch ist, also frei von Manipulationen oder Verfälschungen. Damit die Chipkarte von einer Interaktion mit einer nicht authentischen Anwendung abgehalten wird und somit einer nicht authentischen Anwendung der Zugang zu sicherheitsrelevanten Funktionen verwehrt wird, wird die Chipkarte in eine Mehrwege-Authentisierung eingebunden.

Der Kartenleser, der eine Anwendung ausführt, kann grundsätzlich eine Attestierung seiner Integrität beinhalten oder bei Bedarf über eine Internetverbindung online erhalten. Diese bestätigt die Vertrauenswürdigkeit (Manipulationsfreiheit, Unverfälschtheit) der Anwendung. Ein entsprechendes Zertifikat erhält der Kartenleser beispielsweise im Rahmen einer Attestierung der Anwendung bei der Attestierstelle, welche von dem Anbieter oder Hersteller der Anwendung betrieben wird, oder vom Herausgeber der Ausführungsumgebung der Applikation.

Die von der Chipkarte bereitgestellte Kennung (beispielsweise ein Einmal-Passwort wie eine Zufallszahl) wird mit der Attestierung der Anwendung verknüpft. Somit wird die Chipkarte in diesen Vorgang eingebunden. Die Attestierung der Anwendung und die von der Chipkarte bereitgestellte Kennung werden nun an den Dienst geschickt, auf welchen ein Nutzer über die Anwendung auf dem Kartenleser zugreifen möchte. Der Dienst verifiziert die Attestierung (also die Attestierungsantwort, die sich auf die Anwendung bezieht) und signiert die Kennung nur dann, wenn die Attestierung als gültig verifiziert wurde. Das bedeutet, dass der Anwendung Vertrauenswürdigkeit bescheinigt wird. Die signierte Kennung wird an den Kartenleser und an die Chipkarte übermittelt. Die Chipkarte kann nun über Verifikation der Signatur und einen Abgleich der signierten Kennung mit der ursprünglichen Kennung prüfen, ob der Dienst die passende Kennung signiert zurückgeschickt hat. Wenn das gegeben ist, unterstellt die Chipkarte, dass die auf dem Kartenleser ausgeführte Anwendung vertrauenswürdig ist und bietet der Anwendung Zugriff auf sicherheitsrelevante Funktionen der Chipkarte.

Die Schritte des Verfahrens werden durch den Kartenleser ausgeführt bzw. von dem Kartenleser in die Wege geleitet, indem der Kartenleser die entsprechenden Funktionsaufrufe der Chipkarte, der Attestierstelle und des Dienstes veranlasst.

Zusammengefasst kann das Verfahren wie folgt beschrieben werden: Ein Kartenleser und eine darauf ausgeführte Anwendung interagieren mit einer Chipkarte. Hierbei wird eine Anfrage zur Nutzung einer Anwendung an die Chipkarte gesendet. Die Chipkarte stellt eine Kennung, wie z.B. eine Zufallszahl bereit und übermittelt diese Kennung an den Kartenleser. Der Kartenleser initiiert eine Attestierung der Anwendung bei einer Attestierstelle und übermittelt eine Attestierungsantwort sowie die Kennung an einen von der Anwendung zu nutzenden Dienst. Der Dienst verifiziert die Attestierungsantwort und signiert die Kennung, wenn die Attestierungsantwort gültig ist. Die signierte Kennung wird dann an den Karteleser übermittelt, welcher die signierte Kennung wiederum an die Chipkarte übermittelt. Nun kann die Chipkarte überprüfen, ob die signierte Kennung gültig ist. Wenn die signierte Kennung gültig ist, stellt die Chipkarte weitere Funktionen an die Anwendung bereit. Auf diese Weise wird sichergestellt, dass die Chipkarte mit authentischen Anwendungen kooperiert und die Gefahr eines Missbrauchs von sicherheitsrelevanten Funktionen, die die Chipkarte an die Anwendung bereitstellt, wird reduziert. Dies wird dadurch erreicht, dass die Chipkarte in den Authentisierungsvorgang eingebunden wird, indem eine von der Chipkarte bereitgestellte Kennung mit einer Attestierungsanfrage für die Anwendung bei dem Hersteller der Anwendung verknüpft wird. Die Anwendung wird attestiert und die von der Chipkarte bereitgestellte Kennung wird von dem Dienst erst dann signiert, wenn die Attestierung der Anwendung gültig ist.

In einer Ausführungsform weist das Initiieren der Attestierung der Anwendung bei der Attestierstelle die folgenden Schritte auf: Übermitteln, durch den Kartenleser, einer Attestierungsanfrage für die Anwendung an die Attestierstelle; und Erhalten, durch den Kartenleser, der von der Attestierstelle bereitgestellten Attestierungsantwort.

In einer weiteren Ausführungsform wird die Attestierungsanfrage für die Anwendung zusammen mit der Kennung an die Attestierstelle übermittelt.

Um die Anwendung zu attestieren kann die Attestierungsanfrage und die Attestierstelle sich grundsätzlich allein auf die Anwendung beziehen. Es ist aber auch denkbar, dass die Attestierungsanfrage die von der Chipkarte bereitgestellte Kennung enthält und die Attestierstelle ein Testat für die Verknüpfung der Anwendung mit der aktuell verwendeten Kennung erzeugt. Somit kann die Sicherheit des Verfahrens erhöht werden.

In einer weiteren Ausführungsform weist das Übermitteln der signierten Kennung an die Chipkarte die folgenden Schritte auf: Übermitteln, durch den Dienst, der signierten Kennung an den Kartenleser; und Übermitteln, durch den Kartenleser der signierten Kennung an die Chipkarte.

Die von dem Dienst signierte Kennung wird also nicht direkt an die Chipkarte gesendet. Vielmehr sendet der Dienst die signierte Kennung an den Kartenleser, weil dieser die Schritte des Verfahrens ausführt bzw. initiiert. Der Kartenleser wiederum leitet die signierte Kennung an die Chipkarte weiter.

In einer weiteren Ausführungsform weist das Bereitstellen der Kennung durch die Chipkarte das Erzeugen einer Zufallszahl durch die Chipkarte und Verwenden der Zufallszahl als Kennung auf.

Die Zufallszahl kann dynamisch erzeugt werden, wenn der Kartenleser eine Anfrage an die Chipkarte übermittelt. Alternativ kann die Chipkarte einen Eintrag aus einer Tabelle als Einmal-Passwort auswählen und als Kennung verwenden. An dieser Stelle sind verschiedene Ansätze denkbar, wie die Chipkarte die Kennung erzeugen oder auswählen kann, um diese für den aktuellen Vorgang und die weitere Verarbeitung an den Kartenleser bereitzustellen.

In einer weiteren Ausführungsform werden vor dem Übermitteln der Attestierungsantwort sowie der Kennung an den Dienst die Attestierungsantwort und die Kennung miteinander verknüpft.

Dies kann verhindern, dass die Attestierungsantwort der Attestierstelle, welche sich auf die Anwendung bezieht, mehrfach in gesonderten Anfragen an den Dienst verwendet wird.

In einer weiteren Ausführungsform erfolgt das Überprüfen der Gültigkeit der signierten Kennung durch die Chipkarte unter Rückgriff auf einen öffentlichen Schlüssel des Dienstes.

Der Dienst signiert die Kennung üblicherweise dadurch, dass kryptografische Verfahren eingesetzt werden und ein privater Schlüssel auf die Kennung angewandt wird. Die Chipkarte enthält den öffentlichen Schlüssel des Dienstes und kann somit überprüfen, ob die Signatur gültig ist, also ob der Dienst die ursprüngliche Kennung signiert und zurück an den Kartenleser und die Chipkarte übermittelt hat.

In einer weiteren Ausführungsform ist die Attestierstelle ein Anbieter oder Hersteller der Anwendung.

Das bedeutet, dass der Anbieter der Anwendung die Authentizität der Anwendung bestätigt. Auf diese Bestätigung des Anbieters der Anwendung verlässt sich das vorliegend beschriebene Verfahren und nutzt diese Bestätigung als Grundlage für die Annahme, dass die Anwendung nicht manipuliert oder verfälscht ist. Das Vorliegen dieser Bestätigung ist eine Voraussetzung dafür, dass die Chipkarte mit der Anwendung zusammenarbeitet, d.h., Funktionen an die Anwendung bereitstellt.

In einem weiteren Aspekt ist ein Kartenleser angegeben. Der Kartenleser ist ausgestaltet, mit einer Chipkarte zu interagieren. Der Kartenleser weist einen Prozessor auf, der ausgestaltet ist, eine Anwendung auszuführen und beim Ausführen der Anwendung eine Anfrage an die Chipkarte zu senden, eine von der Chipkarte bereitgestellte Kennung zu erhalten, eine Attestierung der Anwendung bei einer Attestierstelle zu initiieren, eine Attestierungsantwort der Attestierstelle sowie die Kennung an einen Dienst zu übermitteln, die von dem Dienst signierte Kennung zu erhalten, die signierte Kennung an die Chipkarte zu übermitteln, und auf Funktionen der Chipkarte zuzugreifen, nachdem die Chipkarte die signierte Kennung auf Gültigkeit überprüft und die Gültigkeit anerkannt hat.

Der Kartenleser ist ausgestaltet, mit der Chipkarte unter Verwendung von RFID-Technologie oder NFC-Technologie (Near Field Communication) zu interagieren und Daten drahtlos auszutauschen. Hierzu weist der Kartenleser eine Kommunikationsschnittstelle auf, beispielsweise eine Antenne, um elektromagnetische Signale in Richtung der Chipkarte zu emittieren und von der Chipkarte emittierte elektromagnetische Signale zu empfangen. Alternativ kann der Kartenleser Daten mit der Chipkarte auch über eine kontaktbehafte Schnittstelle austauschen.

Der Prozessor ist ausgestaltet, die im Zusammenhang mit dem Verfahren beschriebenen Schritte auszuführen oder zu initiieren. Insofern wird, um Wiederholungen zu vermeiden, auf die Beschreibung des Verfahrens verwiesen.

In einer Ausführungsform ist der Kartenleser ein Smartphone, welches ausgestaltet ist, die Anwendung auszuführen und bei der Ausführung der Anwendung auf die Chipkarte zuzugreifen.

In einer weiteren Ausführungsform ist der Prozessor ausgestaltet, eine Attestierungsanfrage für die Anwendung an die Attestierstelle zu übermitteln und eine von der Attestierstelle bereitgestellte Attestierungsantwort zu erhalten.

In einer weiteren Ausführungsform ist der Prozessor weiter ausgestaltet, die Attestierungsantwort der Attestierstelle sowie die Kennung miteinander zu verknüpfen, bevor der Prozessor diese an den Dienst übermittelt.

In einem weiteren Aspekt ist ein System angegeben. Das System weist einen Kartenleser wie hierin beschrieben, eine Chipkarte und einen Dienst auf. Die auf dem Kartenleser ausgeführte Anwendung greift auf den Dienst zu.

In einer Ausführungsform weist die Chipkarte ein Chipmodul auf, welches einen Microcontroller mit RFID-Eigenschaften oder einen Dual-Interface-Chip aufweist.

### Kurze Beschreibung der Figuren

Nachfolgend werden anhand der beigefügten Zeichnungen einige Details näher beschrieben. Die Darstellungen sind schematisch und nicht maßstabsgetreu. Gleiche Bezugszeichen beziehen sich auf gleiche oder ähnliche Elemente. Es zeigen:
- Fig. 1: eine schematische Darstellung einer sog. Dual-Interface Chipkarte;
- Fig. 2: eine schematische Darstellung einer Chipkarte;
- Fig. 3: eine schematische Darstellung eines Chipmoduls;
- Fig. 4: eine schematische Darstellung eines Systems mit einem Kartenleser;
- Fig. 5: eine schematische Darstellung der Interaktion zwischen einem Kartenleser, einer Chipkarte, einer Attestierstelle und einem Dienst;
- Fig. 6: eine schematische Darstellung der Schritte eines Verfahrens zum Interagieren zwischen einem Kartenleser, auf dem eine Anwendung ausgeführt wird, und einer Chipkarte.

### Detaillierte Beschreibung

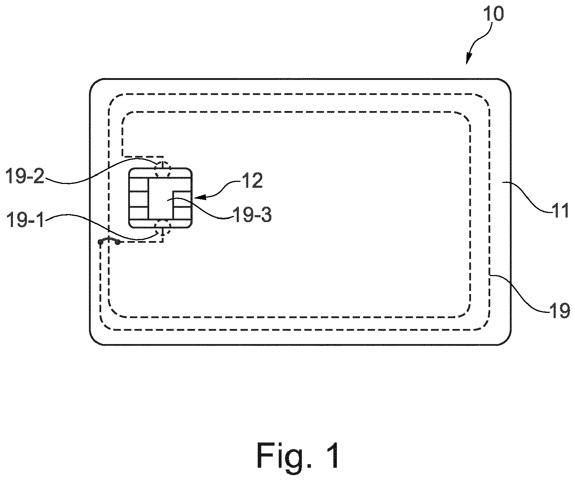

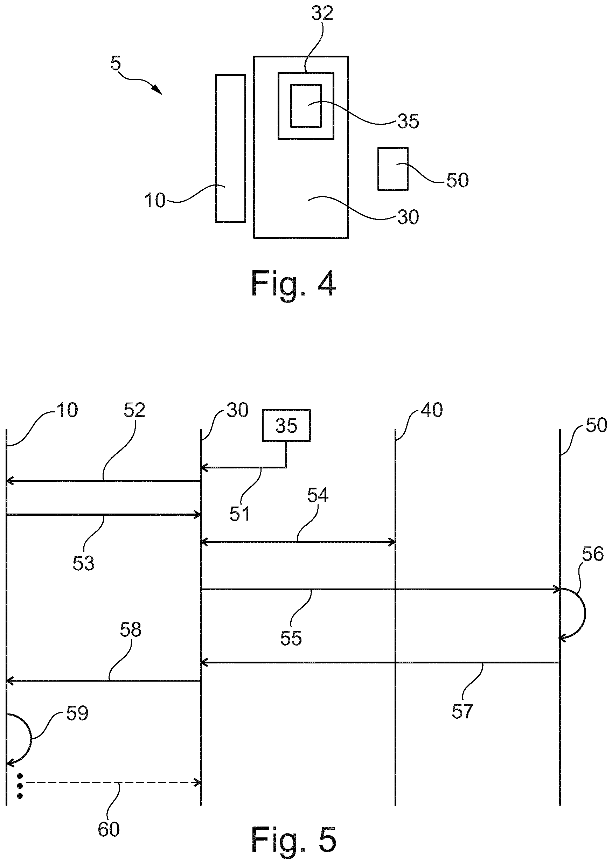

Fig. 1 zeigt schematisch in Draufsicht eine Dual-Interface-Chipkarte 10 im ID-I Format mit einem Kartenkörper 11. In dem Kartenkörper 11 der Chipkarte 10 ist eine Antennenspule 19 und ein Chipmodul 12 angeordnet. Die Antennenspule 19 weist an ihren beiden offenen Enden jeweils einen Kontaktanschluss 19-1, 19-2 auf, über den die Antennenspule 19 leitend mit dem Chipmodul 12 verbunden ist. Die Antennenspule 19 dient zur kontaktlosen Kommunikation eines externen Kartenlesers 30 (siehe Fig. 4) mit dem Chipmodul 12. Für die kontaktbehaftete Kommunikation mit dem Chipmodul 12 besitzt das Chipmodul 12 ein Kontaktpad 19-3 mit mehreren voneinander getrennten Kontaktbereichen.

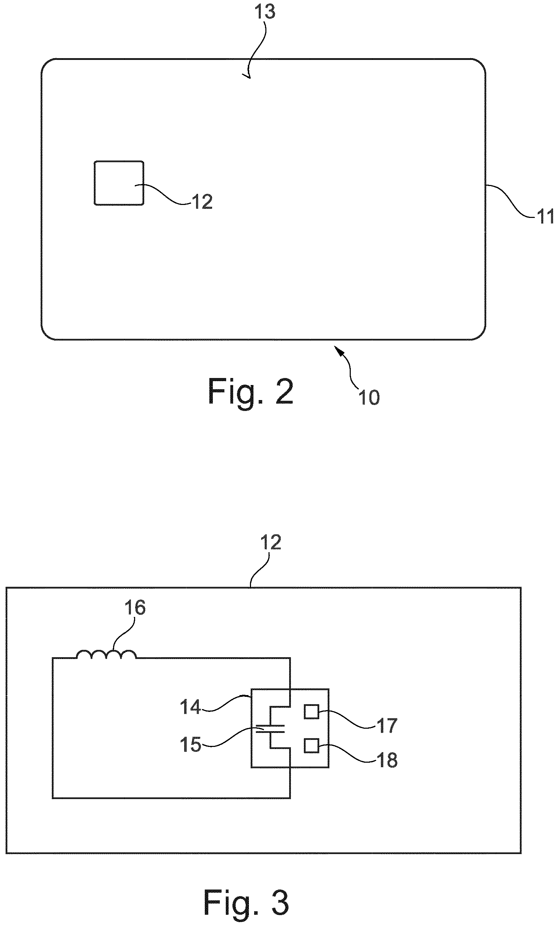

Fig. 2 zeigt eine Chipkarte 10 mit einem Kartenkörper 11 in einer alternativen Ausgestaltung. Der Kartenkörper 11 kann aus einem Kunststoff wie PVC, Polycarbonat oder ähnlichem bestehen. Der Kartenkörper kann eine hier nicht dargestellte metallische Schicht umfassen, deren Hauptflächen jeweils mit einer Kunststoffschicht bedeckt sein können. Eine metallische Schicht kann zum Beispiel in Form eines Kerns oder einer Schicht aus einer Edelstahllegierung beispielsweise mit einer Dicke von 400 µm vorliegen. Die Dicke des Kartenkörpers 11 kann zum Beispiel zwischen 50 µm und 920 µm betragen.

Die Chipkarte 10 umfasst ein Chipmodul 12, das in eine Hauptfläche 13 des Kartenkörpers 11 oder der Chipkarte 10 eingesetzt ist. Das Chipmodul 12 kann in eine Modulöffnung oder Kavität eingesetzt sein. Die Kavität kann ein mittiges Sackloch und einen umlaufenden Randbereich umfassen. Hier ist die Kavität durch das eingesetzte Chipmodul 12 verdeckt. Das Chipmodul 12 kann in der Kavität verklebt oder auf sonstige Weise befestigt sein, beispielsweise durch eine Klemmkraft darin gehalten werden.

Das Chipmodul 12 enthält eine Spule 16. Die Spule 16 weist üblicherweise eine Mehrzahl von Windungen auf, beispielsweise etwa 12 bis 16 Windungen. Die Windungen verlaufen beispielsweise konzentrisch um einen Chip oder einen elektronischen Schaltkreis des Chipmoduls 12. Die Breite einer Windung kann 50 µm bis 70 µm betragen und der Abstand zwischen zwei Windungen kann 100 µm betragen. Die Windungen können Kupferdicken bis zu etwa 30 µm aufweisen.

Der Chip kann zum Beispiel in Form einer integrierten Schaltung realisiert sein und ist zum Beispiel in einer Vergussmasse an einer Unterseite des Chipmoduls 12 befestigt. Über die Spule wird die integrierte Schaltung mit Energie und/oder Signalen versorgt. So kann ein elektromagnetisches Feld in die Spule eingekoppelt werden. Beispielsweise kann die integrierte Schaltung ein Chipkartencontroller mit RFID-Funktionalität sein oder diesen enthalten.

Fig. 3 zeigt ein Ersatzschaltbild des Chipmoduls 12 der Chipkarte 10. Das Chipmodul 12 umfasst die integrierte Schaltung 14, zum Beispiel in Form eines Chips. Die integrierte Schaltung 14 kann zum Beispiel auf das Chipmodul 12 aufgelötet sein oder per Flip-Chip-Montage auf das Chipmodul 12 aufgebracht worden sein. Die integrierte Schaltung 14 enthält einen Kartencontroller für die Chipkarte 10. Die integrierte Schaltung 14 enthält üblicherweise einen Prozessor 17 zum Ausführen von Steuerungsfunktionen für die Chipkarte 10 und für die Kommunikation und zum Ausführen von Rechenoperationen zum Beispiel für Sicherheitsfunktionen. Zudem enthält die integrierte Schaltung 14 einen Speicherbereich 18 zum Ablegen und/oder Verfügbarmachen von Daten.

Die integrierte Schaltung 14 enthält ferner einen Kondensator 15 mit einer geeigneten Kapazität, welche Einfluss auf die Resonanzfrequenz des Schwingkreises hat. Die Kapazität liegt im Bereich von einigen pF, zum Beispiel 78 pF. Die Spule 16 ist parallel zu der integrierten Schaltung 14 geschaltet.

Die Spule 16 und der Kondensator 15 der integrierten Schaltung 14 bilden einen Schwingkreis. Mit Hilfe dieses Schwingkreises kann das Chipmodul 12 mit einem zur Chipkarte 10 externen Lesegerät (beispielsweise einem Kartenleser), einer Produktionsmaschine oder auch einer Messeinrichtung kommunizieren. Das Lesegerät trägt über ein elektromagnetisches Feld Energie in die Spule 16 ein, wodurch die integrierte Schaltung 14 aktiviert und betrieben wird. Die Spule 16 entspricht in ihrer Funktion der Funktion der Antennenspule 19 aus Fig. 1.

Die integrierte Schaltung 14 verfügt über einen Prozessor 17, dessen Arbeitsgeschwindigkeit bzw. Rechenleistung von der Höhe der anliegenden Feldstärke abhängig ist. Ab einer minimalen elektromagnetischen Feldstärke startet der Prozessor 17 und auch die integrierte Schaltung 14 den Betrieb. Mit zunehmender Feldstärke steigt die Betriebsfrequenz des Prozessors 17 und der integrierten Schaltung 14 und somit die Verarbeitungsgeschwindigkeit. Ab einer Grenzfrequenz findet keine weitere Steigerung der Betriebsfrequenz mehr statt. Der Prozessor 17 und auch die integrierte Schaltung 14 befinden sich in einer Sättigung und arbeiten mit maximaler Frequenz.

Der Prozessor 17 führt Rechenoperationen aus, um eine Funktion für eine Anwendung auf dem Kartenleser bereitzustellen, beispielsweise eine Signatur, mit der die Anwendung auf geschützte Daten oder Dienste zugreifen kann. Die Signatur kann in dem Speicher 18 abgelegt sein und der Prozessor 17 greift darauf zu, wenn sich die Anwendung auf dem Kartenleser authentisiert hat.

Die Chipkarte 10 kann eine sog. DI-Karte sein, mit einer qualitativ hochwertigen Verbindungstechnologie zwischen integrierter Schaltung 14 und Spule 16. Vorzugsweise ist dies entweder eine gelötete Verbindung oder eine geschweißte Verbindung.

Zudem kann diese Chipkarte 10 mit einem Betriebssystem (OS, Operating System) ausgestattet sein, das Daten mit einer vorgegebenen Trägerfrequenz, beispielsweise von 13,56 MHz, erhalten und senden kann.

Fig. 4 zeigt ein System 5 mit einem Kartenleser 30, einer Chipkarte 10 und einem Dienst 50. Der Kartenleser 30 weist einen Prozessor 32 auf. Der Prozessor 32 führt eine Anwendung 35 aus.

Die Anwendung 35 greift auf die Chipkarte 10 zu, um mit Hilfe der von der Chipkarte 10 bereitgestellten Funktionen auf den Dienst 50 zuzugreifen.

Fig. 5 zeigt die Interaktionen zwischen der Anwendung 35, die auf dem Kartenleser 30 ausgeführt wird, der Chipkarte 10, der Attestierstelle 40 und dem Dienst 50.

Ausgangspunkt ist eine Aktion in der Anwendung 35, welche eine Nutzereingabe 51 herbeiführt. Der Kartenleser 30 erhält die Nutzereingabe 51 von der Anwendung 35 und erkennt, dass für das Ausführen der von der Nutzereingabe geforderten Funktion ein Zugriff auf die Chipkarte 10 erforderlich ist, um eine von der Chipkarte 10 bereitgestellte Funktion zu initiieren, beispielsweise den Zugriff auf eine Signatur. Um die Ausführung der Funktion zu bewirken erzeugt der Kartenleser 30 eine Anfrage 52 an die Chipkarte 10 und übermittelt diese Anfrage 52 an die Chipkarte.

Bevor die Chipkarte 10 Kommandos zur Ausführung der angefragten Funktion ausführt, wird geprüft, ob die Anwendung 35 für die Chipkarte 10 vertrauenswürdig ist und sich in dem vom Herausgeber der Funktion intendierten Zustand befindet.

In Erwiderung auf die Anfrage 52 erzeugt die Chipkarte 10 eine Kennung, beispielsweise in der Form einer Zufallszahl, und übermittelt die Kennung mit einer Nachricht 53 an den Kartenleser 30. Sodann leitet der Kartenleser 30 eine Attestierung 54 bei der Attestierstelle bzw. dem Anbieter 40 der Anwendung 35 in die Wege, indem eine entsprechende Anfrage an die Attestierstelle 40 übermittelt wird. Von der Attestierstelle 40 erhält der Kartenleser 30 daraufhin eine Attestierungsantwort. Diese Attestierungsantwort sendet der Kartenleser 30 im Schritt 55 an den Dienst 50 zusammen mit der von der Chipkarte 10 bereitgestellten Kennung. Der Dienst 50 verifiziert bei 56 die Attestierung der Anwendung 35. Hierfür kann der Dienst 50 auf bekannte kryptographische Mechanismen zurückgreifen. Wenn der Dienst 50 die Attestierung der Anwendung 35 als valide einstuft signiert der Dienst 50 die Kennung der Chipkarte und sendet die signierte Kennung in Schritt 57 an den Kartenleser 30. Der Kartenleser 30 wiederum sendet in Schritt 58 die signierte Kennung weiter an die Chipkarte 10.

Die Chipkarte 10 kann beispielsweise unter Verwendung des öffentlichen Schlüssels des Dienstes 50 in Schritt 59 überprüfen, ob die signierte Kennung mit der ursprünglich in Schritt 53 von der Chipkarte 10 bereitgestellten Kennung übereinstimmt. Wenn dies der Fall ist, gewährt die Chipkarte 10 der Anwendung 35 Zugriff auf weitere Funktionen, für welche stellvertretend der Schritt 60 gezeigt ist.

Durch diesen Ansatz wird die Chipkarte 10 in die Mehrwege-Authentisierung eingebunden und es wird sichergestellt, dass nur eine authentisierte und unverfälschte Anwendung 35 Zugriff auf sicherheitsrelevante Funktionen der Chipkarte 10 erhält.

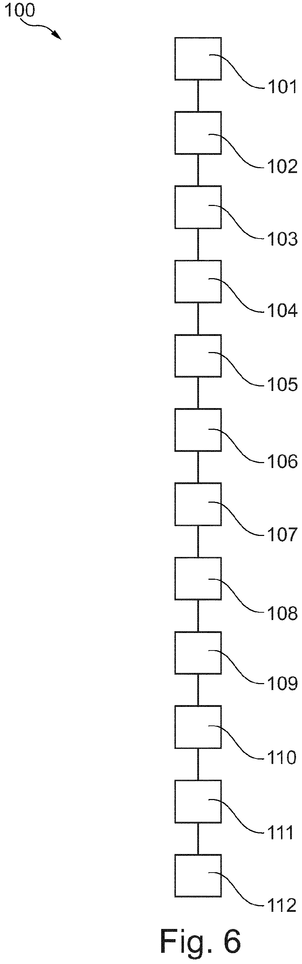

Fig. 6 zeigt eine schematische Darstellung der Schritte eines Verfahrens 100 zum Interagieren zwischen einem Kartenleser 30, auf dem eine Anwendung 35 ausgeführt wird, und einer Chipkarte 10. Das Verfahren 100 weist die folgenden Schritte auf: in einem Schritt 101 erfolgt das Senden einer Anfrage an die Chipkarte 10 durch den Kartenleser 30; in einem Schritt 102 erfolgt das Bereitstellen einer Kennung durch die Chipkarte 10; in einem Schritt 103 erfolgt das Übermitteln der Kennung von der Chipkarte 10 an den Kartenleser 30; in einem Schritt 104 erfolgt das Übermitteln einer Attestierungsanfrage für die Anwendung 35 an die Attestierstelle 40 durch den Kartenleser 30; in einem Schritt 105 erfolgt das Erhalten der von der Attestierstelle 40 bereitgestellten Attestierungsantwort durch den Kartenleser 30; in einem Schritt 106 erfolgt das Übermitteln einer Attestierungsantwort sowie der Kennung an einen Dienst 50 durch den Kartenleser 30; in einem Schritt 106 erfolgt das Überprüfen der Attestierungsantwort auf Gültigkeit durch den Dienst 50; die folgenden Schritte werden ausgeführt in Abhängigkeit davon, ob die Attestierungsantwort gültig ist und die Anwendung gültig attestiert wurde: in einem Schritt 108 erfolgt das Signieren der Kennung durch den Dienst 50; in einem Schritt 109 erfolgt das Übermitteln der signierten Kennung an den Kartenleser 30 durch den Dienst 50; in einem Schritt 110 erfolgt das Übermitteln der signierten Kennung an die Chipkarte 10 durch den Kartenleser; in einem Schritt 111 erfolgt das Überprüfen einer Gültigkeit der signierten Kennung durch die Chipkarte 10; und in einem Schritt 112 erfolgt das Bereitstellen von Funktionen der Chipkarte 10 an die Anwendung 35, wenn die signierte Kennung gültig ist.

In den dargestellten Beispielen ist beschrieben, dass der Dienst 50 die Attestierungsantwort der Attestierstelle überprüft. Es ist aber ebenso denkbar, dass die Chipkarte 10 die Attestierungsantwort der Attestierstelle 40 überprüft. Im letzteren Fall müsste die Chipkarte 10 eine entsprechende Rechenleistung haben, um Funktionen wie Schlüsselverwaltung und Signaturformat ausführen zu können. Daher kann es vorteilhaft sein, wenn das Überprüfen der Attestierungsantwort durch den Dienst 50 ausgeführt wird.

Wenn die Attestierungsantwort der Attestierstelle 40 nicht gültig ist, erkennt der Dienst 50 die Attestierung nicht als gültig an und die Kennung der Chipkarte wird durch den Dienst nicht signiert und auch nicht an den Kartenleser zurückgeschickt. Somit wird der gesamte Vorgang nach Ablauf einer vorgegebenen Zeitspanne abgebrochen und die Anwendung 35 erhält keinen Zugriff auf die sicherheitsrelevanten Funktionen der Chipkarte 10, d.h., dass der Vorgang noch vor Schritt 60 aus Fig. 5 abgebrochen wird.

Ebenso gewährt die Chipkarte 10 der Anwendung 35 keinen Zugriff auf die sicherheitsrelevanten Funktionen (ab Schritt 60 aus Fig. 5), wenn die bei der Chipkarte 10 erhaltene signierte Kennung in Schritt 58 nicht der ursprünglich bereitgestellten Kennung aus Schritt 53 entspricht.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 5: System
- 10: Chipkarte
- 11: Kartenkörper
- 12: Chipmodul
- 13: Hauptfläche
- 14: integrierte Schaltung
- 15: Kondensator
- 16: Spule
- 17: Prozessor
- 18: Speicher
- 19: Antennenspule
- 19-1: Kontaktanschluss
- 19-2: Kontaktanschluss
- 19-3: Kontaktpad
- 30: Kartenleser
- 32: Prozessor
- 35: Anwendung
- 40: Attestierstelle, Anbieter
- 50: Dienst
- 51: Nutzereingabe
- 52: Anfrage bei Chipkarte
- 53: Übermitteln der Kennung, Zufallszahl
- 54: Attestierung
- 55: Signieranfrage der Attestierung inkl. der Kennung, Zufallszahl
- 56: Verifizieren der Attestierung und Signieren der Kennung, Zufallszahl
- 57: Rückmeldung mit signierter Kennung, Zufallszahl
- 58: signierte Kennung, Zufallszahl
- 59: Überprüfung der Signatur des Dienstes
- 60: weitere Interaktion zwischen Chipkarte und Anwendung
- 100: Verfahren
- 101-112: Verfahrensschritte

## Patentansprüche

1. Verfahren (100) zum Interagieren zwischen einem Kartenleser (30), auf dem eine Anwendung (35) ausgeführt wird, und einer Chipkarte (10), das Verfahren aufweisend die folgenden Schritte:
Senden (101), durch den Kartenleser (30), einer Anfrage an die Chipkarte (10);
Bereitstellen (102), durch die Chipkarte (10), einer Kennung;
Übermitteln (103) der Kennung von der Chipkarte (10) an den Kartenleser (30);
Initiieren (104, 105), durch den Kartenleser (30), einer Attestierung der Anwendung (35) bei einer Attestierstelle (40);
Übermitteln (104), durch den Kartenleser (30), einer Attestierungsanfrage für die Anwendung (35) an die Attestierstelle (40);
Erhalten (105), durch den Kartenleser (30), einer von der Attestierstelle (40) bereitgestellten Attestierungsantwort;
Übermitteln (106), durch den Kartenleser (30), der Attestierungsantwort sowie der Kennung an einen Dienst (50);
Überprüfen (107) der Attestierungsantwort auf Gültigkeit;
wenn die Attestierungsantwort gültig ist:
Signieren (108), durch den Dienst (50), der Kennung;
Übermitteln (109, 110), durch den Dienst (50), der signierten Kennung an die Chipkarte (10);
Überprüfen (111), durch die Chipkarte (10), einer Gültigkeit der signierten Kennung;
Bereitstellen (112) von Funktionen der Chipkarte (10) an die Anwendung (35), wenn die signierte Kennung gültig ist.

2. Verfahren (100) nach Anspruch 1,
wobei die Attestierungsanfrage für die Anwendung zusammen mit der Kennung an die Attestierstelle (40) übermittelt wird.

3. Verfahren (100) nach einem der voranstehenden Ansprüche,
wobei das Übermitteln (109, 110) der signierten Kennung an die Chipkarte (10) die folgenden Schritte aufweist:
Übermitteln (109), durch den Dienst (50), der signierten Kennung an den Kartenleser (30);
Übermitteln (110), durch den Kartenleser (30), der signierten Kennung an die Chipkarte (10).

4. Verfahren (100) nach einem der voranstehenden Ansprüche,
wobei das Bereitstellen (102) der Kennung durch die Chipkarte (10) aufweist:
Erzeugen einer Zufallszahl durch die Chipkarte und Verwenden der Zufallszahl als Kennung.

5. Verfahren (100) nach einem der voranstehenden Ansprüche,
wobei vor dem Übermitteln (106) der Attestierungsantwort sowie der Kennung an den Dienst (50) die Attestierungsantwort und die Kennung miteinander verknüpft werden.

6. Verfahren (100) nach einem der voranstehenden Ansprüche,
wobei das Überprüfen (111) der Gültigkeit der signierten Kennung durch die Chipkarte (10) unter Rückgriff auf einen öffentlichen Schlüssel des Dienstes (50) erfolgt.

7. Verfahren (100) nach einem der voranstehenden Ansprüche,
wobei die Attestierstelle (40) ein Anbieter der Anwendung (35) ist.

8. Kartenleser (30), der ausgestaltet ist, mit einer Chipkarte (10) zu interagieren, der Kartenleser (30) aufweisend einen Prozessor (32), der ausgestaltet ist, eine Anwendung (35) auszuführen und beim Ausführen der Anwendung (35):
eine Anfrage an die Chipkarte (10) zu senden;
eine von der Chipkarte (10) bereitgestellte Kennung zu erhalten;
eine Attestierung der Anwendung (35) bei einer Attestierstelle (40) zu initiieren;
eine Attestierungsantwort der Attestierstelle sowie die Kennung an einen Dienst (50) zu übermitteln;
die von dem Dienst (50) signierte Kennung zu erhalten;
die signierte Kennung an die Chipkarte (10) zu übermitteln;
auf Funktionen der Chipkarte (10) zuzugreifen, nachdem die Chipkarte die signierte Kennung auf Gültigkeit überprüft und die Gültigkeit anerkannt hat.

9. Kartenleser (30) nach Anspruch 8,
wobei der Kartenleser (30) ein Smartphone ist, welches ausgestaltet ist, die Anwendung (35) auszuführen und bei der Ausführung der Anwendung (35) auf die Chipkarte (10) zuzugreifen.

10. Kartenleser (30) nach Anspruch 9 oder 10,
wobei der Prozessor (32) weiter ausgestaltet ist:
eine Attestierungsanfrage für die Anwendung (35) an die Attestierstelle (40) zu übermitteln;
eine von der Attestierstelle (40) bereitgestellte Attestierungsantwort zu erhalten.

11. Kartenleser (30) nach einem der Ansprüche 8 bis 10,
wobei der Prozessor (32) weiter ausgestaltet ist:
die Attestierungsantwort der Attestierstelle sowie die Kennung miteinander zu verknüpfen, bevor der Prozessor (32) diese an den Dienst (50) übermittelt.

12. System (5), aufweisend:
einen Kartenleser (30) nach einem der Ansprüche 9 bis 12;
eine Chipkarte (10);
einen Dienst (50), auf den die auf dem Kartenleser (30) ausgeführte Anwendung (35) zugreift.

13. System (5) nach Anspruch 12,
wobei die Chipkarte (10) ein Chipmodul (12) aufweist, welches einen Microcontroller mit RFID-Eigenschaften oder einen Dual-Interface-Chip aufweist.
